# EUROPEAN PATENT SPECIFICATION

(11) **EP 3 787 788 B1**
(45) Date of publication and mention of the grant of the patent: **15.11.2023**
(21) Application number: 19725281.0
(22) Date of filing: 24.04.2019
(51) Int. Cl.: B01J 19/02, B01J 19/24, B01J 3/03

(54) **REACTOR AND METHOD FOR POLYMERIZATION OF MONOMERS**
REAKTOR UND VERFAHREN ZUR POLYMERISATION VON MONOMEREN
REACTEUR ET PROCEDE DE POLYMÉRISATION DE MONOMERES

(30) Priority: 28.04.2018 PL 42539318
(43) Date of publication of application: 10.03.2021
(73) Proprietor: UNIWERSYTET JAGIELLONSKI, 31-007 Kraków (PL)
(72) Inventor: WIECZOREK, Anna, 30-389 Krakow (PL); GLOWACZ, Bartosz, 44-240 Zory (PL); ZIELINSKI, Marcin, 30-126 Krakow (PL); WIERTEK, Roman, 31-348 Krakow (PL)
(74) Representative: Kancelaria Eupatent.pl Sp. z.o.o
(86) International application number: PCT/EP2019/060545
(87) International publication number: WO 2019/207015

(56) References cited:
- WO-A1-2016/181041
- US-A1- 2006 120 213
- US-A1- 2016 220 977

## Description

### TECHNICAL FIELD

The present invention relates to polymerization of monomers, in particular to a reactor and a method for polymerization of monomers, such as block polymerization of vinyl monomers.

### BACKGROUND

Block polymerization of vinyl monomers is a highly exothermic process. As the reaction of polymerization progresses, a Trommsdorff effect can be observed. With higher degrees of conversion, the viscosity of the reactive mixture increases, polymer chain termination reactions are limited, resulting in the generation of areas of local overheating. This leads to creation of empty spaces in the formed polymer block, which negatively affects properties of the resulting material. Due to exothermicity of the process, when designing a reactor, thickness of the walls of the reaction chamber and its size should be carefully considered to avoid an explosion caused by an increase in the monomer vapour pressure. Another important aspect is the selection of material for constructing the walls of the reaction chamber, due to the high reactivity of the monomer and its vapours with materials with which it is in direct contact, and the associated possibility of contaminating the polymer block during the polymerization process.

The polymerization of monomers in appropriate reactors may be used in particular to form polymer scintillators based on polystyrene and polyvinyl toluene. A scintillator consists of a polymer and scintillating additives in an amount of approx. 2 - 3%. The scintillating additives are dissolved in a liquid monomer, upon which the polymerization process takes place, performed in a furnace, within a temperature range of 30 - 300°C.

Scintillators are chemical substances whose particles, when subjected to effects of ionising radiation, reach an excited state or undergo ionisation, and their return to the basic state results in the emission of photons with specific wavelengths. Scintillators are commonly used as detectors of gamma and X nuclear radiation, as well as charged and neutral particles. Scintillating materials are divided into two groups: organic and inorganic, and their properties depend on the atomic numbers of elements and their structure.

Detectors using organic scintillators are predominant in scientific research in the field of nuclear physics and particles physics, the most common among them being polymer scintillators of the "ternary" type, i.e. constructed of three components: a polymer, a first fluorescent additive and a second fluorescent additive.

In spite of the wide variety of the commercial offer, scintillators currently available in trade have many drawbacks. A considerable portion of them have optical heterogeneities visible by a naked eye or in UV light, in the form of fluorescent points, scratches or nontransparent areas. They cause disruption of the isotropic distribution of light in the material.

Such scintillators cannot be used in precise experiments - they are considered as waste, since the described defects result in lowering the lighting efficiency of the detector. There is therefore a need for further improvement of the process of providing polymer scintillators, including the construction of new reactors. It would be desirable to develop a reactor which would enable providing polymer scintillators without optical heterogeneities, due to which the cost of a single unit would be lower due to the minimisation of production waste.

Work is currently underway on the production of polymer scintillators of small sizes, in the order of several centimetres. Usually they have a cylindrical shape. This shape is easy to obtain in a glass reactor, being a single-use ampoule which is closed by immersion in the flame of a burner. After the completed process, the ampoule is broken and the polymer block is removed. However, the glass ampoule is not adapted to provide scintillators or polymers of large sizes, and it also introduces a limitation in the shape of the resulting scintillator sample. Glassworks do not produce ampoules in the form of cuboids, only cylinders. Cutting cuboids out of cylinders generates large losses in material and it is cumbersome. For example, polymer scintillators with cylindrical shapes were used in experiments described in the following publications: "Pulse shape discrimination between (fast or thermal) neutrons and gamma rays with plastic scintillators: State of the art" (G. Bertrand et al,. Nucl Instrum Methods Phys Res A 776 (2015) 114-128) and "Plastic scintillators with efficient neutron/gamma pulse shape discrimination" (N. Zaitseva et al., Nucl Instrum Methods Phys Res A 668 (2012) 88-93).

Moreover, in a reactor of this type it is not possible to obtain long and homogeneous polymer rods. For example, pouring even a small amount of a monomer, of approximately 70 ml, into a cylindrical ampoule with a diameter of approximately 3 cm, results in the generation of a column of liquid with a height of approximately 10 cm. During the polymerization process, the liquid monomer undergoes a reaction and a polymer in the form of a solid is created. However, the pressure of the material itself and the generated pressure, as well as polymerization shrinkage, result in the creation of empty spaces in the polymer block.

This is why it is necessary to design a reactor which would enable the generation of homogeneous polymer cuboids in order to obtain scintillating strips, whose properties could be compared to their corresponding properties of commercial scintillators.

A US patent US8633449 discloses a process of polymerization of scintillators in moulds and the subsequent cutting of scintillators. However, this publication does not disclose the details of construction of the reactor.

A US patent US4666987 discloses a metal reactor, in which an element with a polyolefin additive is formed - this solution is aimed at lowering the temperature of polymerization.

### SUMMARY OF THE INVENTION

There is disclosed a reactor and a method for polymerization of monomers according to the appended claims.

These and other features, aspects and advantages of the invention will become better understood with reference to the following drawings, descriptions and claims.

The construction of the reactor according to the invention enables obtaining a homogeneous polymer in a form of long strips or plates without optical heterogeneities.

### BRIEF DESCRIPTION OF DRAWINGS

The object of the invention is presented herein by means of non-limiting example embodiments shown in a drawing, wherein:
Figs. 1A and 1B present an assembled view of the reactor along with a frame and clamps in a front and back view;
Figs. 2, 3A and 3B present a longitudinal and transverse cross section of the reactor and a view of the sidewall (only the chamber with a longitudinal cover is visible);

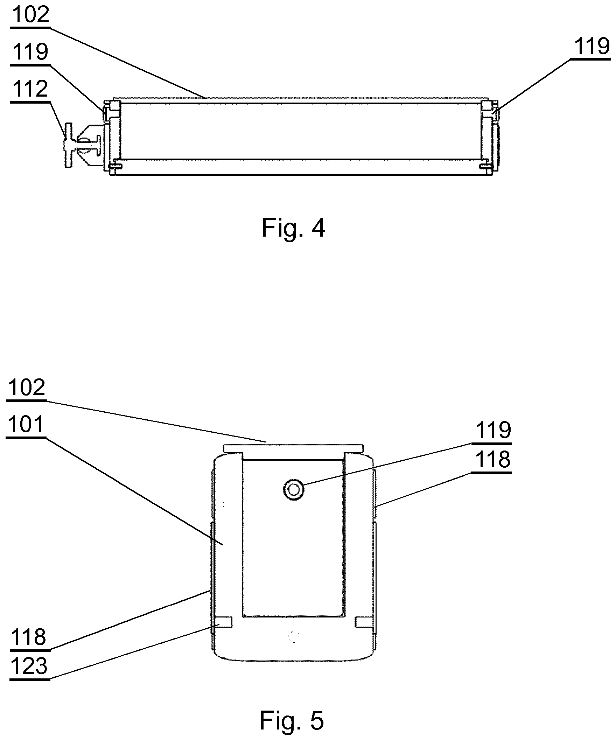

Figs. 4 and 5 present a longitudinal and transverse cross section of the reactor (the frame is also visible);

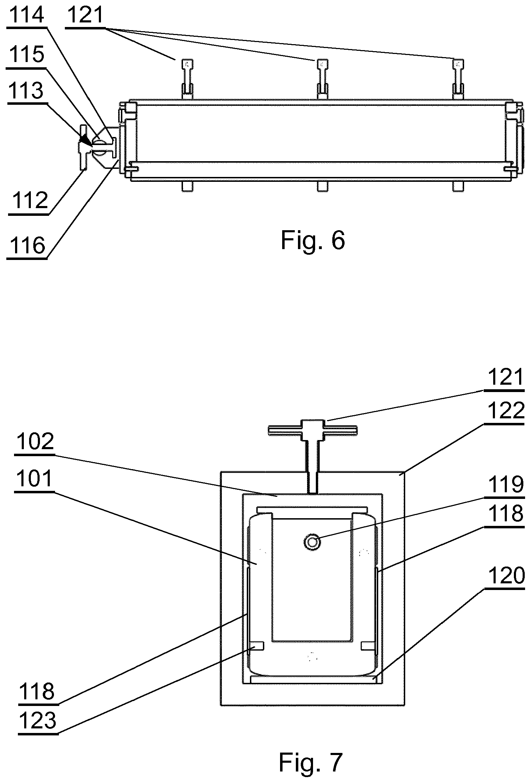

Figs. 6 and 7 present a longitudinal and transverse cross section of the reactor (the frame and clamps are also visible);

### DETAILED DESCRIPTION

The following detailed description is of the best currently contemplated modes of carrying out the invention. The description is not to be taken in a limiting sense, but is made merely for the purpose of illustrating the general principles of the invention.

The inventors have surprisingly found out that the geometry of the reactor affects the number of air bubbles created in the polymer block and the geometry as described herein provides a reduced number of air bubbles.

The reactor as presented herein may be used in particular for obtaining polymer scintillators based on polystyrene and polyvinyl toluene.

Such a scintillator consists of a polymer and scintillating additives, usually in an amount of about 2 - 3%. The scintillating additives are dissolved in a liquid monomer, which is next subject to polymerization in a furnace, within a temperature range of 30 - 300°C, preferably 100 - 150°C.

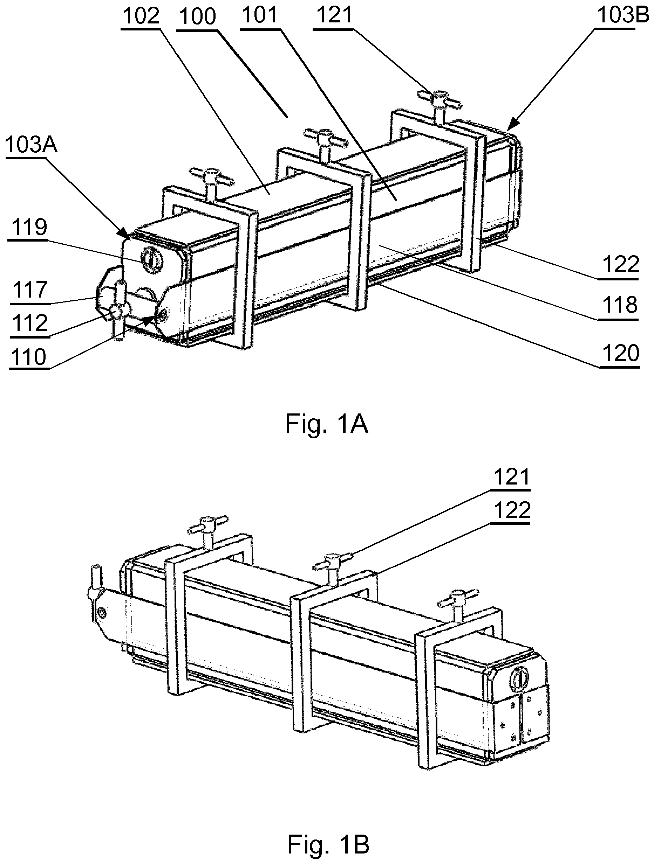

The reactor 100 is presented schematically in Fig. 1. It comprises a main chamber limited by a main body 101 and a longitudinal cover 102. The main chamber is surrounded by a longitudinal frame 110 and transverse frames 122.

The main body 101 of the main chamber has a U-shaped cross-section, and the opposite walls of that cross-section are perpendicular to the bottom of the chamber. The main body 101 may have also other shapes, for example with walls that are not perpendicular to the bottom of the chamber - for example, the cross-section may have a trapezial shape.

The main body 101 is closed at its ends by end walls 103A, 103B, which are preferably detachable and mounted on metal pins 104 via openings 106. The pins 104 protrude from the main body 101 along the longitudinal axis of the main chamber. Instead of metal pins 104, other elements for mounting the end walls 103A, 103B to the main body 101 can be used as well. The detachable end walls 103A, 103B facilitate removal of the scintillator when the polymerization is completed.

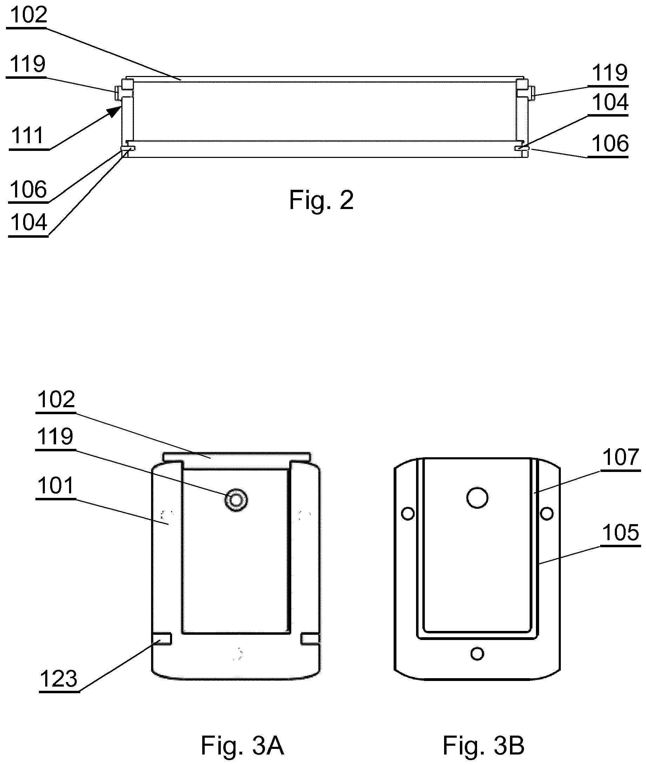

A gasket 107 (preferably in the form of a thin tube) can be mounted in grooves 105 formed in the end walls 103A, 103B (as shown in Fig. 3B). The gasket 107 can be bent to a U shape correspondingly to the shape of the groove 105. The shape of the gasket 107 shall correspond to the cross-sectional profile of the main body 101.

The longitudinal frame 110 is used to keep the reactor in its assembled form during the course of the polymerization process. The longitudinal frame 110 is mounted on the main body 101 after it is assembled with the end walls 103A, 103B and the longitudinal cover 102.

The longitudinal frame 110 has side plates 111 which are adjacent from the outside to the end walls 103A, 103B of the reactor. The side plates 111 are preferably made of metal. The longitudinal frame 110 also comprises frame longitudinal plates 118 adjacent from the outside to the walls of the longitudinal sides of the main body 101. The plates 118 are also preferably made of metal.

A screw 112 is used to exert pressure on at least one of the side plates 111 in a direction of the longitudinal axis of main chamber.

The screw 112 passes through a threaded mounting hole 113 in the shorter side of the frame 117 such that it can be screwed in or out.

At the inner side of the steel frame, the screw 112 is terminated by a flat element 114, preferably circular, provided with a ball bearing 115. Consequently, while screwing the screw 112 into the threaded mounting hole 113 in the steel longitudinal frame 110, the circular element 114 does not rotate along with the screw 112, but only moves towards end walls 103A, 103B and exerts pressure on the surface of the plate 111 placed in front of the end walls 103A, 103B.

A spacer tab 116, which may have a selected thickness, is placed between the plate 111 and the flat element 114 of the screw.

In order to close the chamber of the reactor, the longitudinal cover 102 is placed on the main body 101 of the reactor and the longitudinal frame 110 is mounted. Next, metal (e.g. steel) transverse frames 122 are mounted around the main chamber that have screws 121 that press the longitudinal cover 102 towards the main body 101. The frames 122 may have a rectangular (or other) shape and may have other clamping elements than the screw 121.

In a preferable embodiment, three transverse frames 122 are mounted along the main chamber: one at the centre and two at the sides of the reactor, to ensure tightness of longitudinal cover 102. In other embodiments, only two transverse frames 122 may be used (at the sides of the reactor), or more than three transverse frames 122 can be used.

The transverse frames 122 are also useful as convenient handles for transporting the reactor 100.

The main body 101 and the gasket 107 are made of PTFE (polytetrafluoroethylene)). It's advantage is that it does not react with the monomer. It is thermally and chemically stable, which ensures obtaining a good quality polymer. During cooling, PTFE shrinks in a similar manner to polystyrene and polyvinyl toluene, which prevents cracking of the material. Moreover, it is not subject to visible degradation and the reactor may be used multiple times. Its chemical resistance allows obtaining a pure polymer.

The longitudinal cover 102 is made of steel. Droplets of the monomer may settle on the cover 102 during polymerization, which may lead to local damage of the longitudinal cover 102. The heterogeneous distribution of polymer on the longitudinal cover 102 (only in the form of droplets) can lead to local overheating, and due to problems with the reception of heat, if the longitudinal cover was made of PTFE, it would be damaged. By making the longitudinal cover of steel instead of PTFE, this problem is eliminated. Furthermore, the steel longitudinal cover 102, similarly to the steel baseplate 120 placed under the bottom of the reactor (between the bottom of the main body 101 and the transverse frames 122), distributes heat in a uniform manner and is resistant to compression caused by the transverse frames 122. If the longitudinal cover 102 was made of PTFE, it would be too soft and it could deform during the polymerization process.

### The longitudinal frame 110 is made of steel

The construction of the reactor 100 enables removing of the polymer block without damaging it, due to the detachable end walls 103A, 103B and the detachable longitudinal cover 102. The scintillator that is formed adheres to the bottom and to the walls of the reactor, therefore is the sides and top were not detachable, it would be hard to remove the scintillator. Removal is also facilitated by grinding and polishing the bottom of the main chamber.

Notches 123 can be provided at each of the two longer sides of the reaction chamber. The notches 123 are positioned at the bottom of the walls, at the level of the upper edge of the reactor bottom. For example, the notches 123 can have dimensions of 8 x 6 mm. The notches 123 allow slight parting of the walls, in order to remove the polymer block, with limited risk of mechanical damage to the main chamber 101 of the reactor 100.

In end walls 103A, 103B there may be drilled openings closed by PTFE screws 119. Prior to polymerization, after the reactor is mounted, the reactive mixture can be subject to barbotage with a neutral gas (introduced via these openings), in order to remove oxygen from the chamber 101. Removing oxygen is preferable, since the presence of oxygen could lead to yellowing of the polymer surface. After the barbotage, PTFE screws 119 are screwed into the openings, and the sealed reactor 101 is placed in a furnace, to begin the block polymerization process begins.

The reactor as presented herein can be used to effect the polymerization process within a temperature range of 30 - 300°C and is resistant to high pressure.

In one example embodiment, the reactor can have the following dimensions:
- external dimensions of the chamber: 577 mm x 110 mm x 85 mm;
- internal dimensions of the chamber: 543 mm x 88 mm x 56 mm;
- dimensions of the longitudinal cover: 570 mm x 77 mm x 8 mm;
- length of the whole reactor along with the metal frame (without the pressing frames): 655 mm.

Preferably, the ratio of the internal length and width of the chamber is from 10:1 to 4:1 (preferably 6:1).

Preferably, the ration of the internal length and height of the chamber is from 10:1 to 4:1 (preferably 6:1).

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A reactor for block polymerization of monomers to form a polymer block, comprising:
- a main chamber for forming a polymer block therein, wherein the main chamber is limited by:
- a main body (101) having a bottom and two longitudinal walls;
- two end walls (103A, 103B) detachably mounted to the main body (101); and
- a longitudinal cover (102) detachably mounted to the main body (101);
**characterized in that** the reactor further comprises a longitudinal frame (110) mounted outside the main body (101) and configured to keep the reactor in its assembled form during the polymerization, wherein the main body (101) and the end walls (103A, 103B) are made of poly(tetrafluoroethylene) (PTFE), and wherein the end walls (103A, 103B) and the longitudinal cover (102) are configured to be detached from the main chamber to remove the polymer block from the main chamber after the polymerization.

2. The reactor according to claim 1, further comprising a PTFE gasket (107) mounted in grooves (105) of the end walls (103A, 103B) from the side of the main body (101).

3. The reactor according to claim 1, wherein the longitudinal frame (110) comprises side plates (111) adjacent to the end walls (103A, 103B), and longitudinal plates (118) adjacent to the longitudinal walls of the main body (101), and a baseplate (120) adjacent to the bottom of the main body (101).

4. The reactor according to claim 3, wherein the longitudinal frame (110) further comprises a screw (112) for exerting pressure on at least one of the side plates (111) along the longitudinal axis of main body (101).

5. The reactor according to claim 4, wherein the screw (112) is terminated, at its end close to the end wall (103A, 103B), by a flat element (114) mounted on a ball bearing (115).

6. The reactor according to any of claims from 1 to 5, further comprising at least two transverse frames (122) mounted outside the main body (101) and the longitudinal frame (110), the transverse frames (122) comprising clamping elements (121) for pressing the longitudinal cover (102) towards the main body (101).

7. The reactor according to any of previous claims, wherein the end walls (103A, 103B) have openings closed by PTFE screws (119).

8. A method for performing polymerization of monomers, the method comprising:
- providing the reactor according to any of previous claims comprising a main chamber for forming a polymer block therein, wherein the main chamber is limited by:
- a main body (101) having a bottom and two longitudinal walls;
- two end walls (103A, 103B) detachably mounted to the main body (101); and
- a longitudinal cover (102) detachably mounted to the main body (101);
- placing the monomers in the main chamber of the reactor;
- forming the polymer block by conducting the polymerization reaction in a temperature within a range from 30 to 300°C, preferably from 100 to 300°C,
- detaching the end walls (103A, 103B) and the longitudinal cover (102) from the main chamber after the polymerization, and
- removing the polymer block from the main chamber.

9. The method according to claim 8, wherein the monomers subject to polymerization are vinyl monomers, preferably polystyrene and/or polyvinyl toluene.

10. The method according to claim 8 or 9, further comprising, before conducting the polymerization, barbotage of the reactive mixture by means of a neutral gas in order to remove oxygen from the main chamber.

## Patentansprüche

1. Reaktor zur Blockpolymerisation von Monomeren zum Bilden eines Polymerblocks, umfassend:
- eine Hauptkammer zum Bilden eines Polymerblocks darin, wobei die Hauptkammer durch Folgendes begrenzt ist:
- einen Hauptkörper (101) mit einem Boden und zwei Längswänden;
- zwei Stirnwände (103A, 103B), die abnehmbar an dem Hauptkörper (101) montiert sind; und
- eine Längsabdeckung (102), die abnehmbar an dem Hauptkörper (101) montiert ist;
**dadurch gekennzeichnet, dass** der Reaktor ferner einen Längsrahmen (110) umfasst, der außerhalb des Hauptkörpers (101) montiert und dazu konfiguriert ist, den Reaktor während der Polymerisation in seiner zusammengebauten Form zu halten, wobei der Hauptkörper (101) und die Stirnwände (103A, 103B) aus Polytetrafluorethylen (PTFE) hergestellt sind und wobei die Stirnwände (103A, 103B) und die Längsabdeckung (102) dazu konfiguriert sind, von der Hauptkammer abgenommen zu werden, um den Polymerblock nach der Polymerisation aus der Hauptkammer zu entfernen.

2. Reaktor nach Anspruch 1, ferner umfassend eine PTFE-Dichtung (107), die in Nuten (105) der Stirnwände (103A, 103B) von der Seite des Hauptkörpers (101) montiert ist.

3. Reaktor nach Anspruch 1, wobei der Längsrahmen (110) Seitenplatten (111) benachbart zu den Stirnwänden (103A, 103B) und Längsplatten (118) benachbart zu den Längswänden des Hauptkörpers (101) und eine Grundplatte (120) benachbart zu dem Boden des Hauptkörpers (101) umfasst.

4. Reaktor nach Anspruch 3, wobei der Längsrahmen (110) ferner eine Schraube (112) zum Ausüben von Druck auf mindestens eine der Seitenplatten (111) entlang der Längsachse des Hauptkörpers (101) umfasst.

5. Reaktor nach Anspruch 4, wobei die Schraube (112) an ihrem Ende nahe der Stirnwand (103A, 103B) durch ein flaches Element (114) abgeschlossen ist, das an einem Kugellager (115) montiert ist.

6. Reaktor nach einem der Ansprüche 1 bis 5, ferner umfassend mindestens zwei Querrahmen (122), die außerhalb des Hauptkörpers (101) und des Längsrahmens (110) montiert sind, wobei die Querrahmen (122) Klemmelemente (121) zum Andrücken der Längsabdeckung (102) an den Hauptkörper (101) umfassen.

7. Reaktor nach einem der vorhergehenden Ansprüche, wobei die Stirnwände (103A, 103B) durch PTFE-Schrauben (119) verschlossene Öffnungen aufweisen.

8. Verfahren zum Ausführen einer Polymerisation von Monomeren, wobei das Verfahren Folgendes umfasst:
- Bereitstellen des Reaktors nach einem der vorherigen Ansprüche, der eine Hauptkammer zum Bilden eines Polymerblocks darin umfasst, wobei die Hauptkammer durch Folgendes begrenzt ist:
- einen Hauptkörper (101) mit einem Boden und zwei Längswänden;
- zwei Stirnwände (103A, 103B), die abnehmbar an dem Hauptkörper (101) montiert sind; und
- eine Längsabdeckung (102), die abnehmbar an dem Hauptkörper (101) montiert ist;
- Einbringen der Monomere in die Hauptkammer des Reaktors;
- Bilden des Polymerblocks durch Durchführen der Polymerisationsreaktion bei einer Temperatur im Bereich von 30 bis 300 °C, vorzugsweise 100 bis 300 °C,
- Lösen der Stirnwände (103A, 103B) und der Längsabdeckung (102) von der Hauptkammer nach der Polymerisation und
- Entfernen des Polymerblocks aus der Hauptkammer.

9. Verfahren nach Anspruch 8, wobei die der Polymerisation unterworfenen Monomere Vinylmonomere, vorzugsweise Polystyrol und/oder Polyvinyltoluol, sind.

10. Verfahren nach Anspruch 8 oder 9, ferner umfassend, vor dem Durchführen der Polymerisation, eine Barbotage der reaktiven Mischung mittels eines neutralen Gases, um Sauerstoff aus der Hauptkammer zu entfernen.

## Revendications

1. Réacteur destiné à la polymérisation séquencée de monomères pour former un polymère séquencé, comprenant :
- une chambre principale destinée à la formation d'un polymère séquencé en son sein, ladite chambre principale étant limitée par :
- un corps principal (101) comportant un fond et deux parois longitudinales ;
- deux parois d'extrémité (103A, 103B) montées de manière détachable sur le corps principal (101) ; et
- un couvercle longitudinal (102) monté de manière détachable sur le corps principal (101) ;
**caractérisé en ce que** le réacteur comprend en outre un cadre longitudinal (110) monté à l'extérieur du corps principal (101) et conçu pour maintenir le réacteur dans sa forme assemblée durant la polymérisation, ledit corps principal (101) et lesdites parois d'extrémité (103A, 103B) étant constitués de poly(tétrafluoroéthylène) (PTFE), et lesdites parois d'extrémité (103A, 103B) et ledit couvercle longitudinal (102) étant conçus pour être détachés de la chambre principale pour retirer le polymère séquencé de la chambre principale après la polymérisation.

2. Réacteur selon la revendication 1, comprenant en outre un joint en PTFE (107) monté dans des rainures (105) des parois d'extrémité (103A, 103B) à partir du côté du corps principal (101).

3. Réacteur selon la revendication 1, ledit cadre longitudinal (110) comprenant des plaques latérales (111) adjacentes aux parois d'extrémité (103A, 103B), et des plaques longitudinales (118) adjacentes aux parois longitudinales du corps principal (101), et une plaque de base (120) adjacente au fond du corps principal (101).

4. Réacteur selon la revendication 3, ledit cadre longitudinal (110) comprenant en outre une vis (112) destinée à exercer une pression sur au moins l'une des plaques latérales (111) le long de l'axe longitudinal du corps principal (101).

5. Réacteur selon la revendication 4, ladite vis (112) étant terminée, au niveau de son extrémité proche de la paroi d'extrémité (103A, 103B), par un élément plat (114) monté sur un roulement à billes (115).

6. Réacteur selon l'une quelconque des revendications 1 à 5, comprenant en outre au moins deux cadres transversaux (122) montés à l'extérieur du corps principal (101) et du cadre longitudinal (110), les cadres transversaux (122) comprenant des éléments de serrage (121) destinés à presser le couvercle longitudinal (102) vers le corps principal (101).

7. Réacteur selon l'une quelconque des revendications précédentes, lesdites parois d'extrémité (103A, 103B) comportant des ouvertures fermées par des vis en PTFE (119).

8. Procédé permettant de réaliser la polymérisation de monomères, le procédé comprenant :
- la fourniture du réacteur selon l'une quelconque des revendications précédentes comprenant une chambre principale destinée à la formation d'un polymère séquencé en son sein, ladite chambre principale étant limitée par :
- un corps principal (101) comportant un fond et deux parois longitudinales ;
- deux parois d'extrémité (103A, 103B) montées de manière détachable sur le corps principal (101) ; et
- un couvercle longitudinal (102) monté de manière détachable sur le corps principal (101) ;
- le placement des monomères dans la chambre principale du réacteur ;
- la formation du polymère séquencé en menant la réaction de polymérisation à une température comprise dans une plage allant de 30 à 300°C, de préférence allant de 100 à 300°C,
- le détachement des parois d'extrémité (103A, 103B) et du couvercle longitudinal (102) de la chambre principale après la polymérisation, et
- le retrait du polymère séquencé de la chambre principale.

9. Procédé selon la revendication 8, lesdits monomères soumis à polymérisation étant des monomères vinyliques, de préférence du polystyrène et/ou du polyvinyltoluène.

10. Procédé selon la revendication 8 ou 9, comprenant en outre, avant de mener la polymérisation, un barbotage du mélange réactif au moyen d'un gaz neutre afin d'éliminer l'oxygène de la chambre principale.
